# EUROPÄISCHE PATENTSCHRIFT

(11) **EP 0 643 636 B1**
(45) Veröffentlichungstag und Bekanntmachung des Hinweises auf die Patenterteilung: **21.10.1998**
(21) Anmeldenummer: 94907523.8
(22) Anmeldetag: 09.02.1994
(51) Int. Cl.: B23Q 1/26, B23Q 1/25

(54) **DREHTISCH MIT SCHRITTANTRIEB**
TURNTABLE WITH STEPPED DRIVE
TABLE ROTATIVE COMMANDEE PAS A PAS

(30) Priorität: 02.04.1993 DE 9305031 U
(43) Veröffentlichungstag der Anmeldung: 22.03.1995
(73) Patentinhaber: EXPERT Maschinenbau GmbH, D-64653 Lorsch (DE)
(72) Erfinder: MÖLLER, Reinfried, D-69469 Weinheim (DE)
(74) Vertreter: Helber, Friedrich G., Dipl.-Ing.
(86) Internationale Anmeldenummer: EP9400368
(87) Internationale Veröffentlichungsnummer: WO9422637

(56) Entgegenhaltungen:
- EP-A- 0 256 960
- DE-B- 1 027 036
- DE-B- 1 096 154
- US-A- 2 343 575
- US-A- 3 533 309
- US-A- 3 633 443
- PATENT ABSTRACTS OF JAPAN vol. 9, no. 179 (M-399)(1902) 24. Juli 1985 & JP,A,60 048 245 (HITACHI) 15. März 1985
- MACHINERY Bd. 104, Nr. 2670 , 15. Januar 1964 , BURGESS HILL GB Seiten 144 - 149 HERRIDGE 'weatherley-cincinnati machine for broaching steam turbine discs'

## Beschreibung

Die Erfindung betrifft einen Drehtisch mit Schrittantrieb mit einer durch Wälzlager drehbar auf der Oberseite eines Gehäuses gelagerten Tischplatte, von deren Unterseite mehrere, in gleichmäßigen Winkelabständen versetzt auf dem gleichen Durchmesser angeordnete Antriebsbolzen vortreten, welche in eine Steuernut in einer im Gehäuse gelagerten, motorisch antreibbaren Antriebswalze eingreifen, wobei der Verlauf der Steuernut die Charakteristik der Drehbewegung der Tischplatte bestimmt.

Schrittangetriebene Drehtische dieser Art werden auf vielen Gebieten der industriellen Technik eingesetzt, wenn z.B. Werkstücke taktweise aufeinanderfolgend verschiedenen Bearbeitungsstationen zugeführt, während der Bearbeitung gehalten und dann in die nächstfolgende Bearbeitungsstation geführt werden müssen, wobei die Bearbeitungsstationen in gleichmäßigen Winkelabständen um den Drehtisch herum angeordnet sind. Die Halterungseinrichtungen oder Greifer für die Werkstücke werden dann bei auf der schrittweise angetriebenen Tischplatte des Drehtischs montiert, welche zur Erzielung einer hohen Genauigkeit möglichst spielfrei und hochbelastbar auf dem Drehtisch-Gehäuse gelagert werden muß. Hierfür finden, zumindest bei größeren Einheiten, in der Regel sogenannte Drahtkugellager Verwendung, bei denen die Wälzkugeln auf gehärteten Drahtringen aus Stahldraht abrollen, welche also die Laufbahnen des Kugellagers bilden. Solche Drahtkugellager haben sich für hochbelastete Drehlagerungen großen Durchmessers bewährt. Bei den hier in Frage stehenden Drehtischen war die Ausgestaltung bisher so getroffen, daß die kreisförmig begrenzte Tischplatte an ihrem Außenumfang mit einer umlaufenden Nut zur Aufnahme der beiden, die tischplattenseitigen Laufbahnen des Drahtlagers bildenden Drahtringe versehen war, während die die gehäuseseitigen Laufbahnen bildenden Drahtringe in der Wandung einer den Umfang des Drehtischs aufnehmenden Aussparung des Gehäuses einerseits und der tischplattenzugewandten Umfangswandung eines stirnseitig auf das Gehäuse aufgeschraubten Lager-Halterungs- und Einstellrings angeordnet waren. Die Demontage des Halterungs- und Einstellrings durch Abschrauben vom Gehäuse erlaubt dann auch die Demontage des Lagers und das Abheben der Drehplatte vom Drehtisch-Gehäuse, wobei auch die Einstellung des Lagerspiels durch Beilegen von Distanzscheiben in den Spalt zwischen der Gehäuse-Stirnfläche und der zugewandten Fläche des Halterungs- und Einstellrings möglich ist. Festzuhalten ist jedenfalls, daß die Tischplatte des Drehtischs weitgehend versenkt innerhalb des sie außen umgebenden Lagerbereichs des Gehäuses und des auf diesem aufgeschraubten Halterungs- und Einstellring angeordnet war. Somit ist der Durchmesser der Tischplatte und somit auch des Drahtlagers durch die horizontalen Abmessungen des Gehäuses im Lagerbereich vorgegeben. Zwischen dem Halterungs- und Einstellring und dem Umfang der Tischplatte besteht außerdem ein gewisser - wenn auch geringer - Spalt, durch den Schmutzteilchen und andere Verunreinigungen, wie Bearbeitungsspäne, Bohr- und Kühlflüssigkeit o.dgl. eindringen können. Bei Anwendungsfällen, bei denen diese Gefahr besteht, muß dieser Spalt also zusätzlich in geeigneter Weise abgedeckt oder abgedichtet werden.

Der Erfindung liegt demgegenüber die Aufgabe zugrunde, einen Drehtisch der hier in Frage stehenden Art zu schaffen, bei welcher die Tischplatte das Gehäuse radial überragt, d.h. eine größere Aufspannfläche aufweist, wobei die Lageranordnung selbst in geringerem Maße gegen Eindringen von Verschmutzungen u.dgl. gefährdet und höher belastbar ist.

Ausgehend von einem Drehtisch der eingangs erwähnten Art wird diese Aufgabe erfindungsgemäß dadurch gelöst, daß die kreisförmig begrenzte Tischplatte einen Durchmesser hat, der größer als der zugeordnete obere, ebenfalls kreisförmig begrenzte, den Lagerbereich bildenden Bereich des Gehäuses, daß der das Gehäuse radial überragende Randbereich der Tischplatte in seiner Dicke in Abwärtsrichtung derart verstärkt ist, daß er den Lagerbereich des Gehäuses in Abwärtsrichtung etwas umgreift, daß in der radial nach außen weisenden Wand des Gehäuses im Lagerbereich die gehäuseseitigen Laufbahnen des Wälzlagers für die Tischplatte ausgebildet sind, daß an der nach unten weisenden Fläche des das Gehäuse im Lagerbereich nach unten umgreifenden Tischplatten-Randbereichs ein Lagerring lösbar befestigt ist, und daß in der den Laufbahnen im Gehäuse gegenüberliegenden Innenfläche der Tischplatte die teilweise im übergreifenden äußeren Tischplatten-Randbereich und teilweise im Lagerring liegenden Laufbahnen für die tischplattenseitige Lagerung der Wälzkörper ausgebildet sind. Da die Dreh-Tischplatte das Gehäuse radial überragt, ist also ein das Eindringen von Schmutz oder unerwünschten Flüssigkeiten zum Lager ermöglichender Spalt nicht mehr vorhanden. Der Spalt ist vielmehr an die Unterseite der Tischplatte zwischen den dort an der Tischplatte befestigten Lagerring und das Gehäuse verlegt. Da gleichzeitig auch der Lagerdurchmesser gegenüber dem Durchmesser der Lager bei den bekannten Drehtischen vergrößert ist, wird eine erhöhte Tragfähigkeit des Lagers, d.h. Belastbarkeit der Tischplatte, erreicht, da einerseits der Hebelarm der Abstützung bei Belastung günstiger ist und andererseits das im Durchmesser vergrößerte Lager die Last über eine größere Anzahl von Wälzkörpern abstützt.

Ein besonderer Vorteil der Erfindung liegt darin, daß das Kugellager unter Last einstellbar bzw. nachstellbar ist. Hierdurch wird der Aufwand für ein Nachstellen des Kugellagers im Betrieb wesentlich reduziert, da Aufbauten auf dem Drehtisch, z.B. eine auf dem Drehtisch befestigte Werkzeugplatte oder Einzelwerkzeuge, nicht mehr abmontiert und nach der Neueinstellung wieder aufgebaut werden müssen. Hierdurch ergibt sich eine beträchtliche Verminderung der Ausfallzeiten.

Das Lager des erfindungsgemäßen Drehtischs ist vorzugsweise als - an sich bekanntes - Drahtkugellager ausgebildet, wobei die Ausgestaltung dann so getroffen ist, daß die gehäuseseitigen Laufbahnen des Wälzlagers von zwei in Höhenrichtung beabstandeten, in eine Nut im oberen Lagerbereich des Gehäuses angeordneten Drahtringen aus gehärtetem Stahldraht gebildet sind, und daß die tischplattenseitigen Laufbahnen des Wälzlagers von zwei in Höhenrichtung beabstandeten Drahtringen aus gehärtetem Stahldraht gebildet sind, die in einer teilweise in der gehäusezugewandten Innenseite des ringförmig überragenden Randbereichs der Tischplatte und teilweise im Lagerring ausgebildeten Nut angeordnet sind.

Die Erfindung ist in der folgenden Beschreibung eines Ausführungsbeispiels in Verbindung mit der Zeichnung näher erläutert, und zwar zeigt:
- Fig. 1: eine teilweise aufgeschnittene perspektivische Ansicht eines erfindungsgemäßen Drehtischs mit Schrittantrieb;
- Fig. 2: eine Seitenansicht des Drehtischs, gesehen in Richtung des Pfeils 2 in Fig. 1;
- Fig. 3: eine - teilweise - in einer horizontalen, durch das Gehäuse gelegte Ebene geschnittene Draufsicht des Drehtischs, gesehen in Richtung des Pfeils 3 in Fig. 2;
- Fig. 4: eine teilweise geschnittene Ansicht des Drehtischs, gesehen in Richtung der Pfeile 4a-4a, wobei der nicht geschnittene Bereich zusätzlich, gesehen in Richtung der Pfeile 4b-4b teilweise geschnitten ist; und
- Fig. 5: eine vergrößerte Schnittansicht der in Fig. 4 innerhalb des strichpunktierten Kreises 5 gelegenen Schnittansicht des Lagerbereichs der Tischplatte auf dem Gehäuse.

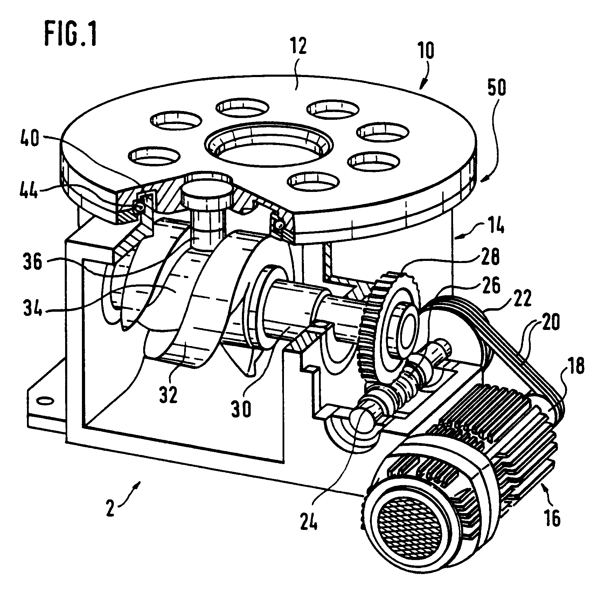

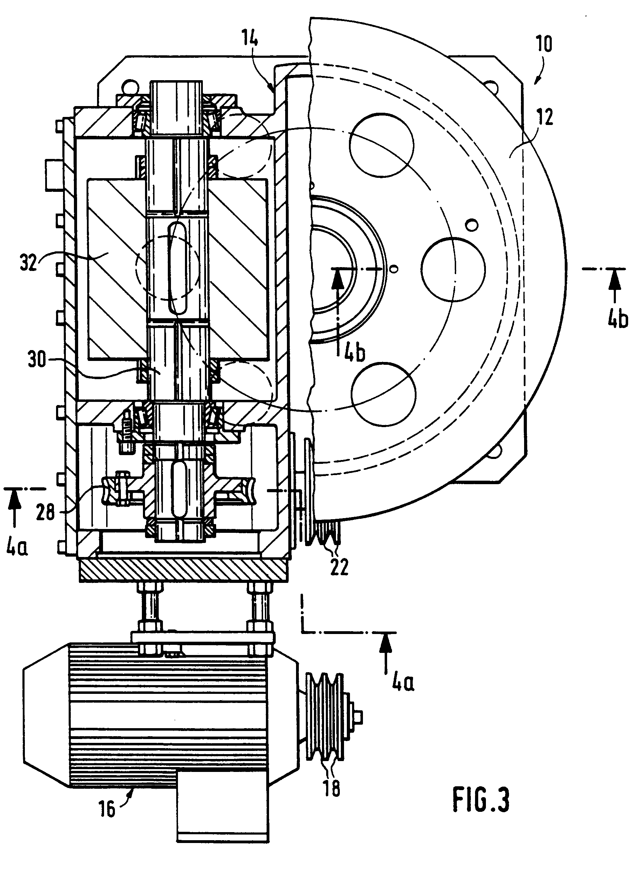

Der in den Fig. 1 bis 4 gezeigte, in seiner Gesamtheit mit 10 bezeichnete Drehtisch weist eine an der Oberseite im wesentlichen ebenflächige, kreisförmig begrenzte Tischplatte 12 auf, die - in der im folgenden noch beschriebenen Weise - auf der Oberseite eines Gehäuses 14 drehbar und durch einen außen am Gehäuse 14 angebauten Elektromotor 16 antreibbar ist. Auf der Welle des Elektromotors 10 sind Keilriemenräder 18 mit relativ geringem Durchmesser befestigt, welche über Keilriemen 20 Keilriemenräder 22 größeren Durchmessers antreiben. Die Keilriemenräder 22 sind auf dem einen aus dem Gehäuse 14 herausgeführten Ende einer im Gehäuse drehbar gelagerten Welle 24 drehfest gehaltert. Die Welle 24 trägt die Schnecke 26 eines als Vorgelege dienenden Schneckengetriebes, dessen mit der Schnecke 26 kämmendes Schneckenrad 28 am Ende einer im Gehäuse gelagerten horizontalen Welle 30 angeordnet ist, die ihrerseits eine Antriebswalze 32 trägt, in deren grundsätzlich zylindrischer Umfangsfläche eine Antriebsnut 34 eingearbeitet ist, in welche - bei angetriebenem Motor 16 - aufeinanderfolgend jeweils ein von der Tischplatte 12 nach unten ins Gehäuse 14 vorstehender Rollenbolzen 36 von einer Schar von den gleichmäßigen Winkelabständen auf einem gemeinsamen Durchmesser angeordneten Rollenbolzen 36 eingreift. Die Länge der Antriebsnut 34 in der Antriebswalze 32 ist so bemessen, daß bei laufendem Motor 16 ein in die Antriebsnut 34 eingeführter und dann bei der weiteren Drehung der Antriebswalze mitgenommener Rollenbolzen 36 gerade an einer Stirnseite der Antriebswalze 32 aus der Antriebsnut 34 austritt, wenn der nächstfolgende Rollenbolzen 36 auf der gegenüberliegenden Stirnseite in die Antriebsnut 32 eintritt. Die Bewegungscharakteristik der Tischplatte während des Durchtritts eines Rollenbolzens durch die Antriebsnut hängt vom Verlauf, d.h. der jeweiligen Steigung der Antriebsnut 34 ab. Dabei können Stillstandsperioden - bei Eingreifen des Rollenbolzens in einen in Umfangsrichtung verlaufenden Nutabschnitt - , Beschleunigungs- und Verzögerungsperioden und Perioden konstanter Geschwindigkeit - bei Eingreifen des Rollenbolzens in einen Nutabschnitt mit konstanter Steigung - aufeinanderfolgen. Bei dem in Fig. 1 gezeigten Drehtisch 10 weist die Tischplatte 12 acht Rollenbolzen auf, so daß die Tischplatte bei einer vollen Umdrehung als beispielsweise insgesamt achtmal von Null auf eine konstante Geschwindigkeit beschleunigt und dann wieder auf Null verzögert, d.h. zum Stillstand gebracht wird, wobei die Stillstandsphase, in welcher beispielsweise die Bearbeitung von Werkstücken in verschiedenen um den Drehtisch herum angeordneten Bearbeitungsstationen erfolgt oder auch Werkstücken in Aufnahmen in einer auf der Tischplatte befestigten Werkzeugplatte übernommen bzw. aus ihnen ausgetragen werden, durch Abschalten des Antriebsmotors verlängert werden kann. Die Tischplatte dreht sich also schrittweise insgesamt achtmal und fährt dabei in den Stillstandsperioden exakt die zugeordnete Bearbeitungs- oder Werkstückübernahme- bzw. Austrageposition an.

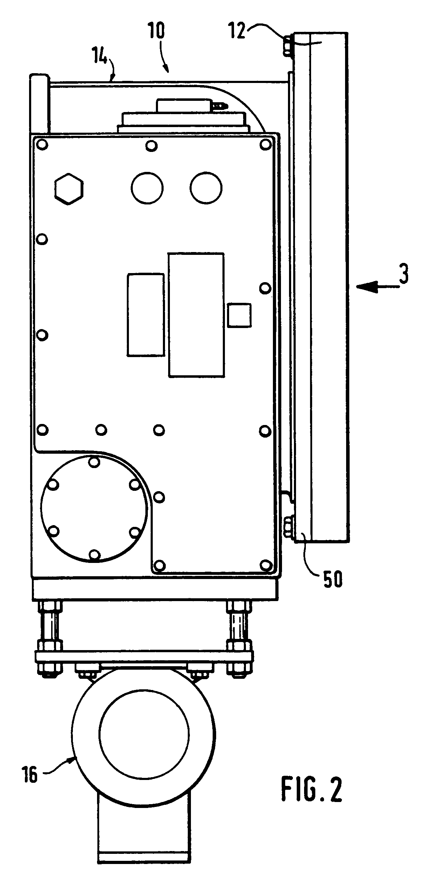

In den Fig. 2 bis 4 ist gegenüber dem in Fig. 1 dargestellten Drehtisch eine Änderung dahingehend dargestellt, daß dort nur 6 Rollenbolzen vorgesehen sind, so daß die Tischplatte also für eine volle Umdrehung 6 Schritte ausführt. Im bisher beschriebenen Umfang ist der Drehtisch 10 an sich bekannt.

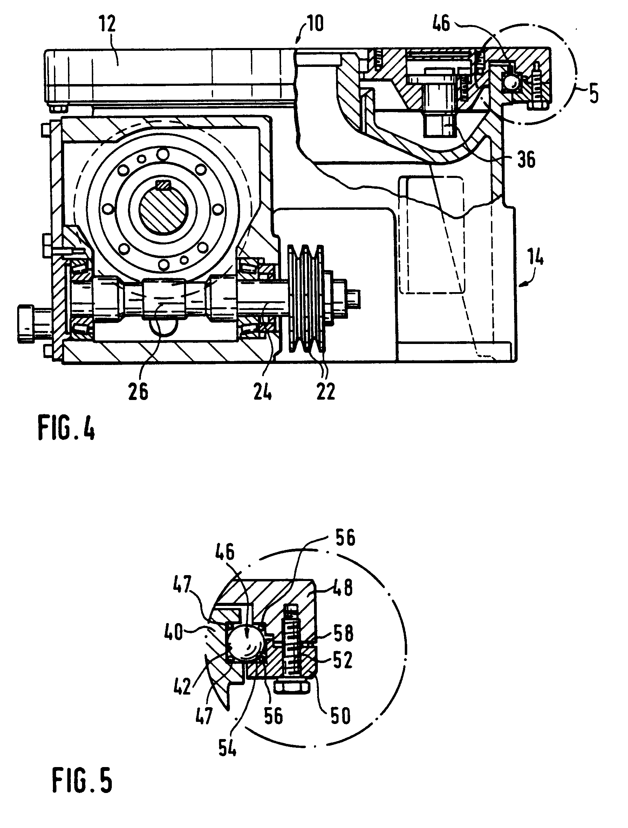

Neu ist jedoch die Lagerung der Tischplatte 12 auf dem Gehäuse 14, und diese Lagerung ist in den Fig. 1 und 4 und insbesondere in Fig. 5 veranschaulicht.

Das Gehäuse 14 weist in seinem oberen, die Tischplatte 12 lagernden Bereich einen in der Draufsicht kreisförmig begrenzten, nach oben vorstehenden Lagerabschnitt 40 auf, in dessen äußerer Umfangsfläche eine Nut 42 eingestochen ist, welche die gehäuseseitig als Laufbahnen für die Lagerkugeln 44 eines Drahtkugellagers 46 dienenden gehärteten Drahtring 47 aus Stahldraht aufnimmt.

Der im Durchmesser größer als der Außendurchmesser des Lagerabschnitts 40 des Gehäuses 14 bemessene Drehtisch 12 ist in seinem den Lagerabschnitt radial überragenden Bereich in seiner Dicke in Abwärtsrichtung verstärkt, so daß dort ein äußerer umlaufender Randbereich 48 entsteht, der etwa die obere Hälfte des Gehäuse-Lagerabschnitts 40 in Höhenrichtung überdeckt. Gegen die nach unten weisende Stirnfläche des äußeren Randbereichs 48 der Tischplatte 12 ist ein Lagerring 50 mittels Schrauben 52 geschraubt, der in Höhenrichtung zusätzlich etwa die untere Hälfte des Lagerabschnitts 40 des Gehäuses 14 überdeckt. In den zum Lagerabschnitt 40 gewandten Innenfläche des Randbereichs 48 und des Lagerrings 50 ist - je etwa zur Hälfte - eine zur Nut 42 fluchtende Nut 54 eingearbeitet, welche die die tischplattenseitigen Laufbahnen der Lagerkugeln 44 des Drahtkugellagers 46 bildenden Drahtringe 56 aufnimmt, wobei einer der Drahtringe 56 in dem im Randbereich 48 der Tischplatte 12 und der andere in dem im Lagerring 50 ausgebildeten Teil der Nut 54 angeordnet ist. Der Lagerring 50 wird über dünne ringförmige Beilagescheiben 58 an die untere Stirnfläche des Randbereichs 48 der Tischplatte 12 geschraubt, wobei durch Verwendung unterschiedlich dicker Beilagescheiben eine weitgehend spielfreie Lagerung der Tischplatte 12 auf dem Lagerabschnitt 40 des Gehäuses 14 eingestellt werden kann, ohne daß hierfür die Demontage der Tischplatte 12 nötig wäre. Zur Demontage der Tischplatte 12 wird die Schraubverbindung des Lagerrings 50 mit der Tischplatte gelöst, worauf die Tischplatte nach oben abhebbar ist.

Es ist ersichtlich, bei der beschriebenen Lageranordnung eine Verschmutzung der Lager durch von oben eintretende Partikel oder Flüssigkeiten nicht möglich ist. Außerdem ist das Kugellager ohne Demontage einer eventuell auf der Tischplatte befestigten Werkzeugplatte oder von Einzelwerkzeugen von außen unter Last einstellbar.

## Patentansprüche

1. Drehtisch (10) mit Schrittantrieb mit einer durch Wälzlager drehbar auf der Oberseite eines Gehäuses (14) gelagerten Tischplatte (12), von deren Unterseite mehrere, in gleichmäßigen Winkelabständen versetzt auf dem gleichen Durchmesser angeordnete Antriebsbolzen (36) vortreten, welche in eine Steuernut (34) in einer im Gehäuse (14) gelagerten, motorisch antreibbaren Antriebswalze (32) eingreifen, wobei der Verlauf der Steuernut (34) die Charakteristik der Drehbewegung der Tischplatte (12) bestimmt,
**dadurch gekennzeichnet,**
daß die kreisförmig begrenzte Tischplatte (12) einen Durchmesser hat, der größer ist als der zugeordnete obere, ebenfalls kreisförmig begrenzte, den Lagerbereich (40) bildende Bereich des Gehäuses (14),
daß der das Gehäuse radial überragende Bereich (48) der Tischplatte (12) in seiner Dicke in Abwärtsrichtung derart verstärkt ist, daß er den Lagerbereich (40) des Gehäuses (14) in Abwärtsrichtung etwas umgreift,
daß in der radial nach außen weisenden Wand des Gehäuses (14) im Lagerbereich (40) die gehäuseseitigen Laufbahnen des Wälzlagers (46) für die Tischplatte (12) ausgebildet sind,
daß an der nach unten weisenden Fläche des das Gehäuse (14) im Lagerbereich nach unten umgreifenden Tischplatten-Randbereichs (48) ein Lagerring (50) lösbar befestigt ist, und
daß in der den Laufbahnen im Gehäuse (14) gegenüberliegenden Innenfläche der Tischplatte (10) die teilweise im übergreifenden äußeren Tischplatten-Randbereich (48) und teilweise im Lagerring (50) liegenden Laufbahnen für die tischplattenseitige Lagerung der Wälzkörper ausgebildet sind.

2. Drehtisch nach Anspruch 1, dadurch gekennzeichnet, daß die gehäuseseitigen Laufbahnen des Wälzlagers (46) von zwei in Höhenrichtung beabstandeten, in eine Nut (42) im oberen Lagerbereich (40) des Gehäuses (14) angeordneten Drahtringen (47) aus gehärtetem Stahldraht gebildet sind, und daß die tischplattenseitigen Laufbahnen des Wälzlagers (46) von zwei in Höhenrichtung beabstandeten Drahtringen (56) aus gehärtetem Stahldraht gebildet sind, die in einer teilweise in der gehäusezugewandten Innenseite des ringförmig überragenden Randbereichs (48) der Tischplatte (12) und teilweise im Lagerring (50) ausgebildeten Nut (54) angeordnet sind.

## Claims

1. Rotary table (10) with a stepping drive including a table plate (12), which is rotatably mounted by means of roller bearings on the upper surface of a housing (14) and projecting from whose underside there is a plurality of drive pegs (36), which are offset at uniform angular spacings and arranged on the same diameter and which engage in a control groove (34) in a motor driven drive roller (32) mounted in the housing (14), the shape of the control groove (34) determining the characteristics of the rotary movement of the table plate (12), characterised in that the circular shaped table plate (12) has a diameter which is larger than the associated upper region, which is also of circular shape and affords the bearing region (40), the housing (14), that the region (48) of the table plate (12) which extends radially beyond the housing is of increased thickness in the downward direction so that it somewhat engages around the bearing region (40) of the housing (14) in the downward direction, that the races on the housing side of the roller bearing (46) for the table plate (12) are formed in the radially outwardly directed wall of the housing (14) in the bearing region (40), that releasably secured to the downwardly directed surface of the edge region (48) of the table plate, which engages downwardly around the housing (14) in the bearing region, there is a bearing ring (50) and that formed in the inner surface of the table plate (10) opposite to the races in the housing (14) there are the races for the support of the rollers on the bearing plate side which are situated partly in the overhanging outer edge region (48) of the table plate and partly in the bearing ring (50).

2. Rotary table as claimed in Claim 1, characterized in that the races on the housing side of the roller bearing (46) are constituted by two vertically spaced wire rings (47) of hardened steel wire, which are disposed in a groove (42) in the upper bearing region (40) of the housing (14) and that the races on the table plate side of the roller bearing (46) are constituted by two vertically spaced wire rings (56) of hardened steel wire which are arranged in a groove (54) formed partly in the inner surface of the annular overhanging edge region (48) of the table plate (12) directed towards the housing and partly in the bearing ring (50).

## Revendications

1. Table tournante (10) comportant un entraînement pas à pas avec une plaque de table (12) montée tournante, au moyen de paliers à roulement, sur la face supérieure d'un carter (14), plaque de la face inférieure de laquelle font saillie plusieurs tétons d'entraînement (36) répartis selon des espacements angulaires réguliers et disposés sur le même diamètre, tétons s'engageant dans une gorge de commande (34) ménagée dans un rouleau d'entraînement (32) pouvant être entraîné par moteur, tourillonnant dans le carter (14), l'allure de la gorge de commande (34) déterminant la caractéristique du mouvement rotatif de la table tournante (12), caractérisée par le fait que la plaque de table (12), limitée à une forme circulaire, a un diamètre supérieur à celui de la zone supérieure associée du carter (14), délimitée également à une forme circulaire et constituant la zone de tourillonnement (40),
que la zone (48), dépassant radialement du carter, de la plaque de table (12), a son épaisseur renforcée dans la direction du bas, de manière qu'elle saisisse par le pourtour, à peu près dans la direction du bas, la zone de tourillonnement (40) du carter (14),
que les pistes de roulement, situées côté carter, du palier à roulement (46) pour la plaque tournante (12) sont réalisées dans la paroi, tournée radialement vers l'extérieur, du carter (14), dans la zone de tourillonnement (40),
que, sur la surface, tournée vers le bas, de la zone de bordure (48) de la plaque de table, entourant vers le bas le carter (14) dans la zone de tourillonnement, est fixée de façon désolidarisable une bague de palier (50), et que dans la surface intérieure, placée en regard des pistes de roulement réalisées dans le carter (14), de la plaque de table (10), sont réalisées les pistes de roulement, destinées au tourillonnement, du côté plaque de table, des corps de roulement, en étant placées, partiellement, dans la zone de bordure extérieure (48), entourant par le dessus, de la plaque de table et, partiellement, dans la bague de palier (50).

2. Table tournante selon la revendication 1, caractérisée par le fait que les pistes de roulement, situées côté carter, du palier à roulement (46), sont constituées par deux anneaux de fil métallique (47) espacés en direction de la hauteur, disposés dans une gorge (42) ménagée dans la zone de tourillonnement supérieure (40) du carter (14) et constitués en un fil d'acier durci, et que les pistes de roulement, situées côté plaque de table, du palier à roulement (46), sont constituées par deux anneaux de fil métallique (56), espacés dans la direction de la hauteur et constitués en fil d'acier durci, qui sont disposés dans une gorge (54) réalisée, partiellement, dans la face intérieure, tournée vers le carter, de la zone de bordure (48) dépassant, en forme d'anneau, de la plaque de table (12) et, partiellement, dans la bague de palier (50).
